# EUROPEAN PATENT APPLICATION

(11) **EP 4 578 294 A1**
(43) Date of publication of application: **02.07.2025**
(21) Application number: 23220432.1
(22) Date of filing: 28.12.2023
(51) Int. Cl.: A23J 1/14, A23L 11/00, A23L 11/30, A23L 33/105, A23L 33/185, A23L 15/00

(54) **DEVELOPMENT OF A PLANT-BASED FUNCTIONAL FOOD INPUT**

(30) Priority: 26.12.2023 TR 202318588
(71) Applicant: Eti Gida Sanayi Ve Ticaret Anonim Sirketi, 26110 Odunpazari/Eskisehir (TR)
(72) Inventor: MARASLI, SERDAR, Eskisehir (TR); DEMIRCI, SULTAN, Eskisehir (TR)
(74) Representative: Kaya, Erdem

(57) **Abstract**

The invention relates to a method for obtaining a plant-based functional food input rich in macro- and micronutrients, to plant-based functional food inputs obtained as a result of the said method, and to food products containing these inputs. In more detail, the invention is a method for obtaining a plant-based functional food input rich in macro- and micronutrients, characterized in that it comprises the process steps of applying denaturation heat treatment at least once to lupin, separating the lupin beans - aquafaba obtained as a result of the heat treatment, using the separated aquafaba as a first input and processing the lupin beans into flour to be prepared as a second input.

## Description

### Subject of the Invention

The invention relates to a method for obtaining a plant-based functional food input rich in macro- and micronutrients, to plant-based functional food inputs obtained as a result of the said method, and to food products containing these inputs.

### State of the Art

Lupin is a legume that can be grown in many regions of the world, mainly in North America and Mediterranean countries, and grown in many cities in the Mediterranean and Central Anatolia regions in Turkey. Lupin, which is widely consumed as a snack, contains about 36% protein, 9% fat, 3% ash, 40% dietary fiber by weight. High in protein and dietary fiber, it is considered as an alternative to many foods of plant origin, especially soy. In addition, it contains much lower ratios of many anti-nutrients such as phytic acid, trypsin inhibitors, saponins and phenolic compounds than soy and similar foods of plant origin. Provided below is a table to compare lupin with different legumes in terms of their protein content.

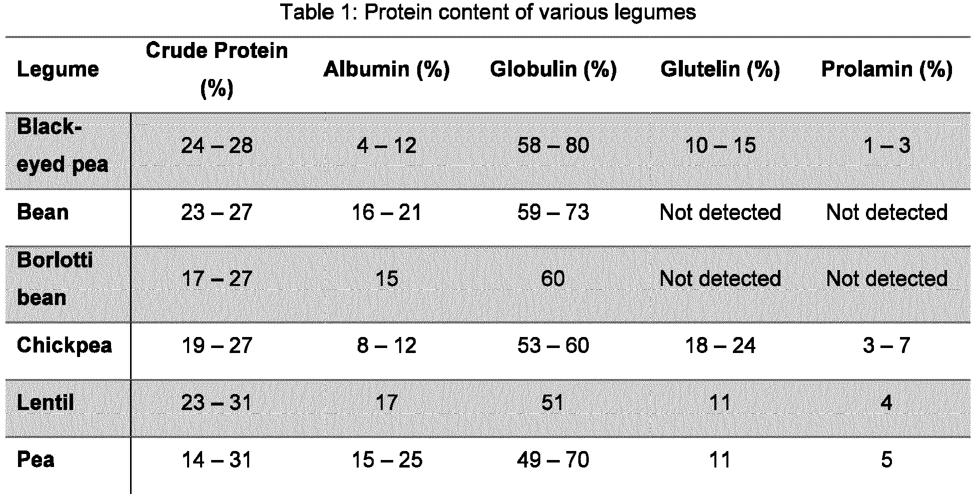

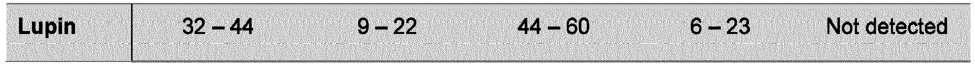

As can be seen in Table 1, lupin is one of the options with the highest crude protein ratios among legumes. The amino acid ratios thereof are also in balance compared to many legumes. Among the amino acids in the table, it is albumin that increases the foam and/or emulsion forming capacity of the legume the most and thus provides functional properties to the legume. Therefore, lupin, which has a higher albumin ratio than other options, stands out among legumes with this feature. Studies in the literature indicate that the albumin contained in lupin is well digestible and has high biological value (Mulyar and Smirnova, 2016). In another study, it was determined that lupin is a plant protein that is advantageous in terms of digestibility, supporting this argument (Tome, 2013). Lupin proteins, which contain higher ratios of the arginine, lysine, leucine and phenylalanine amino acids than soy and many different alternative legumes (Prusinski, 2017), are also suitable for consumption by celiac patients on a gluten-free diet (Arnoldi and Greco, 2011).

Since protein content is not the only criterion to be considered in the selection of legumes, the fiber content is also taken into consideration in terms of nutrition. Similar to Table 1, Table 2 below is provided to compare the soluble and insoluble fiber contents of some legumes.

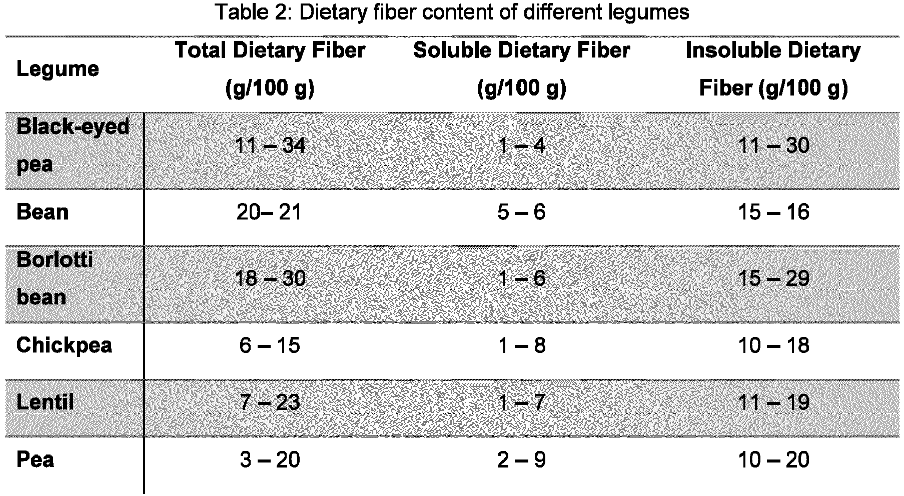

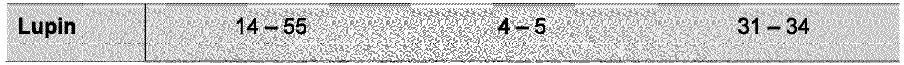

When Table 2 is examined, it is seen that lupin is one of the legumes richest in dietary fiber. It has been reported in the literature that consumption of lupin-based foods reduces plasma cholesterol, triglycerides and blood pressure, and also reduces the risk of cardiovascular disease (van de Noort, 2017).

Despite all the above-mentioned benefits, the usage rates and utilization variety of lupin in food products remain insufficient. Due to its high content of alkaloids, one of the non-nutrients, lupin is not suitable for consumption as a food product in its raw form. While sweet lupin varieties have an alkaloid content of around 200 mg/kg, this value can increase up to 42000 mg/kg in bitter lupin varieties. Before consumption, the alkaloid amount of lupin should be reduced by various processes and a debittering process should be applied. Although the use of lupin in Turkey is limited to being consumed plainly as a snack after the debittering process, lupin is also suitable for use in various food products for different purposes with the application of different processes. Especially in food products which have low nutritional properties and are not considered healthy by consumers, the state of the art does not include uses that would make the product more nutritious and healthier. For example, refined white flour, an ingredient in many convenience food products, is very poor in proteins, essential amino acids such as lysine, fibers, minerals and vitamins. Gluten, which is contained in many food products, is not suitable for the consumption of a certain segment of the society, such as celiac patients, or eggs, which are also contained in many food products, are among the products that are not consumed by people on a vegan diet, and cannot be included in the diet of people with egg allergy. These examples can be extended for many reasons for different foods, and there is a need to provide a solution to the aforementioned problems with healthier and/or more nutritious and/or plant-based alternatives.

As a result, the aforementioned problems and the shortcomings of the existing solutions have made it necessary to realize a novelty in the relevant technical field. With the present invention, a method for obtaining a plant-based functional food input, preferably with the use of lupin, the said functional inputs and food products containing the said functional inputs are developed.

### The Object of the Invention

The object of the invention is to develop a plant-based source of protein and fiber and to improve the functionality of snack food products using this food input.

Another object of the invention is to develop lupin aquafaba, which can be used to reduce or completely remove eggs in cake products thanks to its foam and gel forming functionality, and can be used instead of eggs, egg powder, egg white powder, gelatin, pectin, hydrocolloids (such as agar agar, gum arabic) used for gelling properties in aerated snack products (such as marshmallows, nougat, fondant).

Another object of the invention is to develop a method for obtaining a food input for use in the development of snack products suitable for vegan diets, plant-based diets and gluten-free diets.

Another object of the invention is to develop inputs which enable the snack food products containing thereof to have all the aforementioned advantages.

The structural and characteristic features and all advantages of the invention will be more apparent from the following detailed description. Therefore, the interpretation should be based on this detailed description.

### Detailed Description of the Invention

The invention relates to a method for obtaining a plant-based functional food input rich in macro- and micronutrients, to plant-based functional food inputs obtained as a result of the said method, and to food products containing these inputs.

In this detailed description, the preferred alternatives of the inputs, the food products containing these inputs and the method for obtaining the inputs according to the invention are described solely for the purpose of a better understanding of the subject and without any limiting effect.

The inputs according to the invention are obtained by processing lupin *(Lupinus spp.),* which ensures that the food products containing thereof are healthier and more nutritious. All known types of lupin are suitable for being obtained by the method described within the scope of the invention, and the lupin inputs obtained by the said method are suitable for use in the ingredients of food products.

Basically, the method described within the scope of the invention comprises the following process steps
- applying denaturation heat treatment at least once to lupin,
- separating the lupin beans - aquafaba obtained as a result of the heat treatment,
- obtaining the separated liquid (aquafaba) as a first input for gelling purposes or obtaining the separated liquid (aquafaba) as a first input for foaming purposes by lowering the pH value,
- processing the lupin beans into flour to be prepared as a second input.

The first input represents lupin aquafaba and the second input represents lupin flour, which are developed as a result of the method described within the scope of the invention.

Lupin subjected to the denaturation heat treatment, which is the first step of the method according to the invention, is preferred to be sweet (an alkaloid amount of s 200 mg/kg) or debittered. Debittering is a process step related to the reduction of the bitterness, i.e. the amount of alkaloids, of lupin which is bitter in its raw form (reducing the amount of alkaloids from 42000 mg/kg to zero) as a result of certain processes. If the preferred lupin within the scope of the invention is sweet, the said method is directly initiated by the denaturation heat treatment. If the preferred lupin within the scope of the invention is bitter, before the denaturation heat treatment, the lupin is subjected to debittering as detailed below.

In applications where the use of bitter lupin is preferred, the lupin is cleaned and sorted before starting the debittering process step. Debittering comprises the process steps of soaking the lupin in a liquid for a predetermined period of time, changing the liquid at predetermined periods during soaking, and subjecting the lupin to heat treatment at a predetermined temperature. The liquid referred to herein is preferably, but not limited to, water. The process parameters of the debittering process step are determined to increase the permeability of the lupin beans to ensure complete removal of alkaloids from the lupin beans. The said parameters include water changing periods, heat treatment time and temperature.

In the preferred embodiment of the invention, the debittering process step takes 5-7 days. During this time, the water in which the lupin is soaked is changed, preferably every 2 - 6 hours. In the preferred embodiment of the invention, the water in which the lupin is soaked is changed every 3 - 4.5 hours. In order to obtain a homogeneous lupin - water mixture and therefore to achieve a more effective debittering process, the lupin is stirred periodically, preferably with the help of a mixer. The mixer is preferably operated for 30 - 90 s/10 min for the first 12 hours and then preferably for periods of 30 - 90 s/60 min until the debittering process step is completed. In the preferred embodiment of the invention, the mixer is preferably operated for 60 s/10 min for the first 12 hours and then for periods of 60 s/60 min until the debittering process step is completed. In addition, the diffusion between the lupin and water slows down since the amount of bitterness gradually decreases as the debittering time progresses. In order to shorten and optimize the debittering time, the cell wall permeability of the lupin should be increased. For this purpose, a heat treatment is applied to the lupin, preferably at 25 hours into the debittering process. The said heat treatment is preferably applied at a temperature of 70 - 85°C and for 85 - 95 minutes. Alkaloids are completely removed from the lupin beans at the end of the debittering process step by applying all these processes together or separately. If the heat treatment is applied at a higher temperature than the temperature range mentioned above and/or for longer periods of time, there is a risk that the nutrients of the lupin would be lost; and if it is applied at a lower temperature than the temperature range mentioned above and/or for shorter periods of time, there is a risk that the debittering process would not be accelerated sufficiently. Therefore, the temperature and times are optimized as mentioned.

Before continuing with the processes applied to the debittered lupin beans, a mixture of at least one or more of tap water, distilled water, reverse osmosis water and brine is added to the lupin. After the addition of water, the lupin is subjected to a denaturation heat treatment. The aim of the said denaturation heat treatment is to impart properties that will enhance the functional aspect of the inputs to be obtained from the lupin. More precisely, it is to ensure that all or part of the proteins contained in the lupin are denatured and transferred to the aquafaba. In this way, the properties of the said liquid portion, such as foam forming capacity and/or foam stability, will be improved and Aquafaba can be used as a lupin input. The lupin beans have a high protein content, and the main proteins contained therein are reported in the literature as albumin, glutelin and globulins. Among globulins, the protein ratios of α-conglutin, β-conglutin, γ-conglutin and δ-conglutin are high. β-conglutins constitute 44 - 45% of the total globulin content. Therefore, heat treatment parameters are determined by considering the denaturation temperature of β-conglutins, i.e. 85 - 89°C. In the preferred embodiment of the invention, the denaturation heat treatment temperature is applied as 82 - 100°C. The said denaturation heat treatment preferably takes 130 - 160 minutes. Thus, in the mixture of lupin beans - aquafaba obtained as a result of denaturation heat treatment, both lupin beans and the remaining aquafaba have high nutritional values and can be used as functional inputs in food products. In order to ensure the diffusion of the denatured proteins into the lupin aquafaba, the lupin beans are soaked in the lupin aquafaba for 2-6 hours after the heat treatment.

By applying the process parameters in the denaturation heat treatment as mentioned above, at 82 - 100°C for 130 - 160 minutes, this heat treatment can be applied once or more than once in a row. In other words, in case of an increased need for aquafaba with improved properties such as foam forming capacity and/or foam stability, which is separated from the mixture obtained as a result of the denaturation heat treatment, a second aquafaba with the same properties such as foam forming capacity and/or foam stability as the first aquafaba can be obtained by re-applying the same heat treatment to the lupin beans - aquafaba mixture. The main reason for the preference of the above-mentioned ranges of temperature and time in the denaturation heat treatment is to ensure that the protein is denatured as a result of the heat treatment.

In the preferred embodiment of the invention, the debittered lupin is subjected to the denaturation heat treatment once.

In an alternative embodiment of the invention, the debittered lupin is subjected to the denaturation heat treatment at least once, preferably twice. In this embodiment, the foam forming capacity and/or foam stability of the liquids obtained as a result of the first and second denaturation heat treatments are identical.

The lupin beans are separated from the aquafaba in the mixture obtained after the denaturation heat treatment. The lupin beans are preferably subjected to heat treatment at 100 - 150°C for 120 - 240 minutes. Thus, after the denaturation heat treatment, the moisture ratio of the lupin beans with a moisture of about 70% is reduced to 8 - 15%. The size of the lupin beans with reduced moisture ratio is reduced by various milling equipment. As a result of this process, the lupin beans processed into flour are made ready to be used in food products as a second input. The resulting second input, i.e. the lupin flour, comprises about 35 - 40% dietary fiber, 35 - 40% protein and 8 - 12% fat by weight. The heat treatment applied to the lupin beans after the denaturation heat treatment ensures the inactivation of the lipase enzyme present in the lupin beans. This prevents the formation of peroxides in the second input obtained from the lupin and increases the stability and shelf life of the second input.

After the denaturation heat treatment, the liquid portion (aquafaba) remaining after the separation of the lupin beans constitutes the first input. This first input contains 95 - 99.5% by weight of water and 0.5 - 5% dry matter transferred through the lupin beans. The said dry matter contains 55 - 65% by weight of proteins and these proteins are the same proteins that make the egg foam when whisked. The ratios of water and dry matter contained in the first input vary depending on the type, size, etc. of the lupin subjected to the method according to the invention, and in a preferred embodiment of the invention, the first input contains 99% by weight of water and 1% by weight of dry matter transferred through the lupin beans.

The lupin aquafaba as the first input and the lupin flour as the second input, obtained as a result of the method according to the invention, can be used together or separately in food products in order to provide functionality to these products and to increase the nutritional values of the products. Although the use of the first input is not limited to these examples, it can be realized as a substitute for at least one of egg, milk protein, gelatin, other plant proteins, hydrocolloid (cellulose, xanthan gum, guar gum, agar gum, etc.) options to be used in bakery products, nougat, ice cream and other aerated product ingredients, caramel and confectionery products in order to provide a mixture of at least one or more properties such as foam forming, gel forming, bulking, emulsifying, stabilizing and thickening to the product it contains.

In embodiments where the first input developed within the scope of the invention is preferred for foam forming purposes, a weak organic acid is added to the aquafaba; thus, the pH value of the aquafaba is reduced to the range of 4 - 4.5. In the preferred embodiment of the invention, the organic acid added is at least one or a mixture of more than one of citric acid, acetic acid, lactic acid, and tartaric acid, but is not limited to these options, with the resulting pH value is 4.2. The reason for the preference of the said pH value is that at this value, the isoelectric point and the pl value of the proteins that enable aquafaba to form foam are equal to each other; therefore, the surface tension is low as the net load on the protein surface approaches zero. In this case, the protein has a greater ability to trap air bubbles and emulsify.

The second input obtained by the method according to the invention can be used as a substitute for a mixture of at least one or more of flour, fiber, protein and extract obtained from a mixture of at least one or more of cereals, pseudo-cereals, legumes, nuts, fruits and vegetables in bakery products.

As a result, a zero-waste method using a legume has been developed with the method according to the invention, and lupin-based inputs with high fiber and high protein, which can be used both in powder form and in liquid form, fulfilling various additional functions, have been obtained. With these inputs, there is an opportunity to offer easily digestible, healthy and nutritious food products, especially snack food products, to people with limited dietary options, such as celiac patients and people on a vegan diet. The said inputs can be used both in water-based products such as bakery products, caramel and nougat, and in oil-based products such as chocolate and cream.

## Claims

1. A method for obtaining a lupin-based input rich in macro- and micronutrients for use in food products, **characterized in that** it comprises the process steps of:
• applying denaturation heat treatment at least once to lupin,
• separating the lupin beans - aquafaba obtained as a result of the heat treatment,
• obtaining the separated aquafaba as a first input and processing the lupin beans into flour to be prepared as a second input.

2. A method according to claim 1, **characterized in that** bitter lupin or sweet lupin is used as the lupin.

3. A method according to claim 2, **characterized in that**, when bitter lupin is used, an additional 5-7 days of debittering process is applied prior to the denaturation heat treatment.

4. A method according to claim 3, **characterized in that** debittering includes soaking the lupin in a liquid, preferably water for a predetermined period of time, changing the liquid at periods of between 2-6 hours during soaking, and subjecting the lupin to heat treatment at a predetermined temperature.

5. A method according to claim 3, **characterized in that** debittering includes mixing the lupin with a mixer for 30 - 90 s/10 min for the first 12 hours, then for periods of 30 - 90 s/60 min until the debittering process step is completed.

6. A method according to claim 4, **characterized in that** the said heat treatment is applied to the lupin at a temperature of 0 - 85°C and for 85 - 95 minutes at 25 hours into the debittering process step.

7. A method according to claim 1, **characterized in that** the denaturation heat treatment is applied once to the lupin at a temperature of 82 - 100°C and for 130 - 160 minutes.

8. A method according to claim 1, **characterized in that** the denaturation heat treatment is applied to the lupin twice in a row at a temperature of 82 - 100°C and for 130 - 160 minutes.

9. A method according to claim 1, **characterized in that** the lupin beans are soaked in the lupin aquafaba for 2 - 6 hours after the heat treatment to allow diffusion of the denatured proteins into the lupin aquafaba.

10. A method according to claim 1, **characterized in that** the lupin beans with a moisture of about 70%, which are separated from the aquafaba, are subjected to heat treatment at 100 - 150°C for 120 - 240 minutes to reduce the moisture ratio to 8 - 15%.

11. Inputs obtained by the method for obtaining a plant-based functional food input rich in macro- and micronutrients, **characterized in that** they comprise lupin aquafaba as a first input and lupin flour as a second input.

12. The input according to claim 11, **characterized in that** the first input contains 95 - 99.5% by weight of water and 0.5 - 5% by weight of dry matter transferred through the lupin bean.

13. The input according to claim 12, **characterized in that** the said dry matter contains 55 - 65% by weight of protein.

14. The input according to claim 11, **characterized in that** the first input comprises a mixture of at least one or more of citric acid, acetic acid, lactic acid, and tartaric acid options to be used for foam forming purposes in food products and has a pH value in the range of 4 - 4.5.

15. The input according to claim 11, **characterized in that** the second input contains 35 - 40% dietary fiber, 35 - 40% protein and 8 - 12% fat by weight.
